# FASCICULE DE BREVET EUROPEEN

(11) **EP 0 878 343 B1**
(45) Date de publication et mention de la délivrance du brevet: **26.07.2000**
(21) Numéro de dépôt: 98470008.8
(22) Date de dépôt: 01.04.1998
(51) Int. Cl.: B60N 2/06

(54) **Glissière pour sièges de véhicules automobiles**
Gleitschiene für Fahrzeugsitze
Seat slide for a vehicle seat

(30) Priorité: 15.04.1997 FR 9704795
(43) Date de publication de la demande: 18.11.1998
(73) Titulaire: BERTRAND FAURE EQUIPEMENTS S.A., 92641 Boulogne Cedex (FR)
(72) Inventeur: Soisnard, Michel, 57000 Metz (FR)
(74) Mandataire: Ballot, Paul Denis Jacques

(56) Documents cités:
- EP-A- 0 697 306
- DE-A- 4 301 241
- DE-A- 4 304 107
- FR-A- 2 728 203
- US-A- 3 759 587
- US-A- 4 232 895
- US-A- 4 422 612
- US-A- 4 530 481
- US-A- 4 957 267
- US-A- 5 213 300

## Description

La présente invention concerne une glissière pour sièges de véhicules automobiles, notamment pour des sièges avant. Ces sièges sont montés sur glissière pour permettre leur réglage en position longitudinale, notamment, en ce qui concerne le siège du conducteur, pour lui permettre de régler la position de son siège en fonction de sa taille.

Outre la fonction de réglage, les glissières assurent la fixation du siège au plancher du véhicule et doivent de ce fait avoir une résistance suffisante pour éviter que le siège se désolidarise du plancher notamment en cas de choc.

Différents types de glissières sont déjà bien connus (voir notamment le préambule de la revendication indépendante). De manière générale, les systèmes de glissières comporte un élément femelle et un élément mâle, l'un étant fixé au plancher et l'autre à la structure du siège. De plus, ils comportent des organes de manoeuvre et des organes de verrouillage. Le réglage en position est couramment effectué manuellement mais il peut aussi être motorisé.

Des glissières connues sont ainsi constituées par l'assemblage de deux profilés coulissant l'un dans l'autre, ce coulissement pouvant être facilité par exemple en utilisant des billes placées entre les deux profilés. On connaît en particulier des systèmes de glissières dans lesquels le profilé femelle a une section en forme de U dont les ailes comportent un retour vers l'intérieur, le profilé mâle ayant également une section de forme générale en U, ouvert du coté du profilé femelle sur toute sa longueur et comportant des ailes qui s'insèrent sous les retours d'ailes du profilé femelle.

De ce fait, il est nécessaire d'adopter pour les profilés des sections de forme complexe pour éviter que les profilés ne se désolidarisent sous un effort d'arrachement du siège. En effet, sous un tel effort vertical, les ailes du profilé femelle ont tendance à s'écarter, et celles du profilé mâle à se rapprocher, avec le risque que le profilé mâle s'échappe du profilé femelle, et que le siège soit désolidarisé du véhicule.

Pour éviter le rapprochement des ailes du profilé mâle, il est déjà connu, par exemple par le document FR-A-2250400, de renforcer ce profilé par des entretoises placées entre les ailes du profilé mâle et réparties sur la longueur du dit profilé.

On connaît aussi, par le document FR-A-2728203, une glissière dans laquelle le profilé femelle comporte au moins un élément d'espacement qui s'insère entre les flancs constituant les ailes du U du profilé mâle, pour les empêcher de se rapprocher l'un de l'autre. Dans cette glissière, l'élément d'espacement, qui sert aussi à la fixation du profilé femelle sur le plancher du véhicule, est fixe, alors que le profilé mâle, lié à l'armature de siège, est coulissant. Les ailes du profilé mâle enfourchent le dit élément d'espacement quelle que soit la position de réglage de la glissière, et sont donc empêchées de se rapprocher l'une de l'autre.

La présente invention vise à améliorer encore un système de ce type, pour assurer une meilleure sécurité en renforçant le maintien du siège sur le plancher du véhicule lorsque, en cas d'accident, une forte sollicitation verticale vers le haut tend à séparer les deux profilés de la glissière.

Avec ces objectifs en vue, l'invention a pour objet une glissière pour siège de véhicule, comportant un profilé femelle ayant une section de forme générale en U présentant deux ailes et deux retours d'ailes dirigées l'un vers l'autre et vers le fond du U, et un profilé mâle ayant également une section de forme générale en U présentant des ailes et des retours d'ailes dirigés vers l'extérieur et s'insérant sous les retours d'ailes du profilé femelle, cette glissière étant caractérisée en ce qu'elle comporte au moins une pièce d'accrochage solidarisée sur le profilé femelle et s'étendant entre les ailes du profilé mâle, la dite pièce d'accrochage comportant de chaque côté, face aux ailes du profilé mâle, au moins une dent pointue, en un matériau plus dur que celui du profilé mâle, la pointe de la dent étant située à proximité directe de l'aile du profilé mâle.

En fonctionnement normal, un jeu minimal existe entre la pointe de chaque dent et la paroi de l'aile lui faisant face, permettant ainsi le coulissement normal du profilé mâle par rapport au profilé femelle. En cas d'un effort important tendant à écarter les deux profilés l'un de l'autre, et du fait de l'imbrication des retours d'ailes du profilé mâle sous les retours d'aile du profilé femelle, il se produit une déformation des profilés qui tend à rapprocher l'une de l'autre les deux ailes du profilé mâle, comme on le comprendra mieux par la suite. Lorsque cette déformation s'accentue, les ailes du profilé mâle arrivent au contact des pointes des dents de la pièce d'accrochage qui, parce que le métal qui les constitue est plus dur que celui du dit profilé, commencent à pénétrer dans le métal des dites ailes et s'y ancre d'autant plus fortement si la déformation se poursuit. Les ailes du profilé mâle sont en quelque sorte harponnées par les dents de la pièce d'accrochage, et, comme celle-ci est solidaire du profilé femelle, la séparation amorcée des deux profilée ne peut se poursuivre. On notera que l'ancrage des dents dans les ailes est bien évidemment d'autant plus profond que les ailes se rapprochent plus l'une de l'autre. Mais, de plus, cet ancrage s'accentue, lorsque les deux glissières continuent à s'écarter l'une de l'autre, par le fait que les dents génèrent alors une bavure par une amorce d'arrachement du métal des ailes et que cette bavure crée un obstacle supplémentaire à l'écartement des glissières. Autrement dit, plus l'effort de séparation des deux glissières est important, plus la résistance à cet effort augmente.

Pour favoriser encore cet effet, selon une disposition préférentielle, le bord des dents situé du coté du fond du profilé femelle est sensiblement parallèle au dit fond, ou même incliné vers celui-ci.

D'autres caractéristiques et avantages apparaîtront dans la description qui va être faite d'une glissière conforme à l'invention.

On se reportera aux dessins annexés dans lesquels :
- la figure 1 est une vue en coupe longitudinale de la glissière dans un premier mode de réalisation,
- la figure 2 est une vue en coupe à échelle agrandie selon la ligne II-II de la figure 1,
- les figures 3 et 4 illustrent l'évolution des déformations des deux profilés lors d'un effort tendant à séparer les deux profilés,
- la figure 5 est une vue en coupe longitudinale partielle de la glissière dans une première variante de réalisation,
- les figures 6 et 7 montrent, respectivement en coupe longitudinale et transversale, une deuxième variante de réalisation.

Le système de glissières représenté sur les différentes figures comporte un profilé femelle 1 et un profilé mâle 3 en tôle d'acier laminée à chaud et profilée par pliage, par exemple en acier à haute limite élastique.

Le profilé femelle 1 a une section de forme générale en U, comportant un fond 5 sensiblement plat, destiné à être placé horizontalement et fixé sur le plancher (non représenté) du véhicule, et deux ailes latérales 9 s'étendant sensiblement verticalement et se prolongeant par des retours d'aile 11 en forme de crochet dirigés vers l'intérieur du U et vers le bas.

Le profilé mâle 3 a également une section de forme générale en U présentant deux ailes 13 s'étendant parallèlement et verticalement vers le bas à partir d'une paroi de fond 15 destinée à être fixée sur une armature de siège, non représentée. Des retours d'aile 19 s'étendent à partir des bords inférieurs des ailes 13, vers l'extérieur et vers le haut, pour venir s'insérer sous les retours d'ailes 11 du profilé femelle 1, en passant juste en dessous du bord 12 de ceux-ci.

Les ailes et retours d'aile respectifs des deux profilés sont conformés pour constituer des chemins de roulement pour des billes 25 réparties sur la longueur de la glissière, et maintenues de manière connue en soi, pour faciliter le déplacement du profilé mâle dans le profilé femelle.

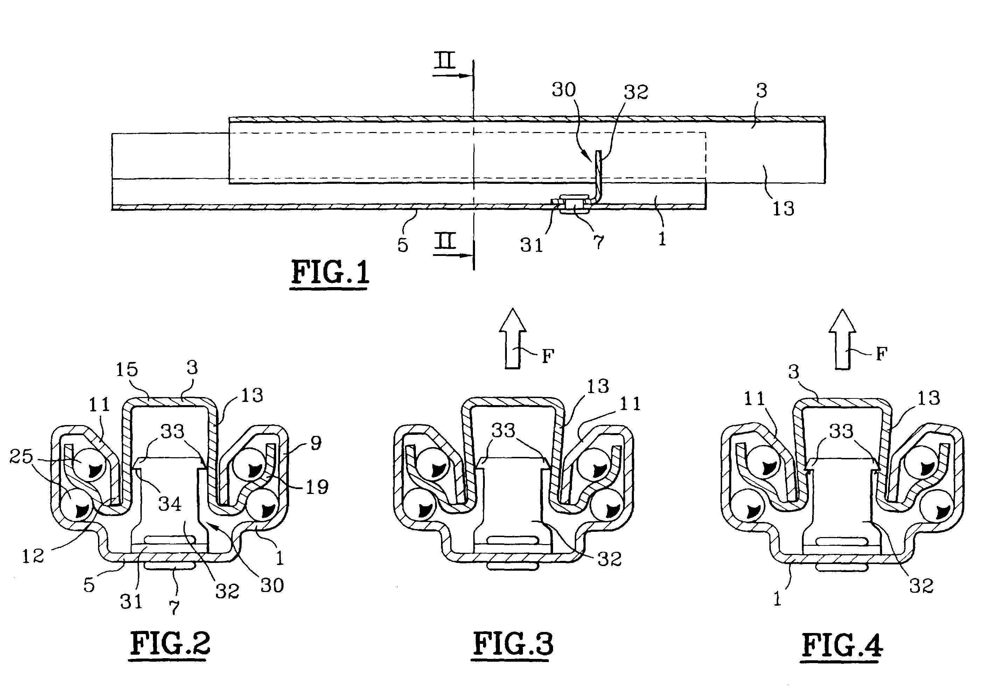

Une pièce d'accrochage 30 en forme générale d'équerre est placée à l'intérieur de la glissière, vers l'extrémité arrière du profilé femelle (situé vers la droite sur la figure 1). Cette pièce d'accrochage est réalisée en un matériau plus dur que le métal des profilés 1 et 3, par exemple en acier soumis à un traitement thermique et thermochimique de trempe et revenu. Une aile 31 de la pièce d'accrochage s'étend contre le fond 5 du profilé femelle et y est fixée par un rivet 7. La fixation pourrait également être assurée par une vis ou par soudure ou tout autre moyen de fixation équivalent. L'autre aile 32 de la pièce d'accrochage s'étend verticalement, dans un plan perpendiculaire à la direction de coulissement de la glissière, entre les deux ailes 13 du profilé mâle. L'aile 32 est découpée de manière à former de chaque côté une dent pointue 33 s'étendant en direction de l'aile 13 du profilé mâle lui faisant face, la pointe de la dent restant toutefois distante de la paroi de l'aile du profilé mâle, d'environ 0,5 mm par exemple.

Dans la position de fonctionnement normal de la glissière, telle que représentée figure 2, la pièce d'accrochage ne perturbe aucunement le coulissement relatif des profilés du fait du jeu existant entre les dents et les ailes du profilé mâle.

Lorsque le profilé mâle subit une forte sollicitation vers le haut, ce qui peut se produire par les efforts exercés sur le siège lors d'un accident, les profilés ont tendance à se déformer comme représenté figures 3 et 4. Dans un premier temps, représenté figure 3, l'effort vertical F tend à déplacer le profilé mâle vers le haut. Du fait de l'imbrication des retours d'aile 19 du profilé mâle sous ceux 11 du profilé femelle, cet effort tend à déplier les dits retours d'aile. Il s'ensuit, comme on le comprendra aisément, que les parties basses des ailes 13 du profilé mâle se rapprochent l'une de l'autre, jusqu'à venir au contact des dents 33 de la pièce d'accrochage. Lorsque ce rapprochement se poursuit, comme illustré figure 4, les dents 33 pénètrent dans le métal plus tendre des ailes 13 et s'y ancrent, bloquant alors le déplacement du profilé mâle vers le haut. Comme on l'a déjà expliqué, l'ancrage des dents sera d'autant plus fort que l'effort F sera élevé puisque le rapprochement des ailes 13 aura alors tendance à s'accentuer. Cet effet est accentué par le fait que les ailes 13, qui étaient au départ sensiblement parallèles, se retrouvent alors inclinées et que la distance entre leurs bords inférieurs est plus faible que la distance correspondante au niveau des dents, favorisant donc l'ancrage des dents si le profilé mâle se déplace vers le haut. Cet effet est encore accentué par les bavures, visibles sur la figure 4, qui se forment si le profilé mâle se déplace vers le haut après que les dents aient pénétré dans ses ailes. Pour assurer un bon ancrage des dents dans le métal des ailes, la face inférieure 34 des dents est sensiblement perpendiculaire aux ailes. Cela évite que l'effort de soulèvement du profilé mâle n'ait tendance à faire ressortir les dents hors de l'empreinte qu'elles ont créée en pénétrant dans les ailes du profilé mâle.

On notera encore que les dents 33 sont situées sensiblement à hauteur des retours d'ailes 11 du profilé femelle, c'est à dire suffisamment au dessus du bord inférieur des ailes du profilé mâle mais suffisamment bas cependant pour être dans la zone ou la déformation des ailes est la plus importante.

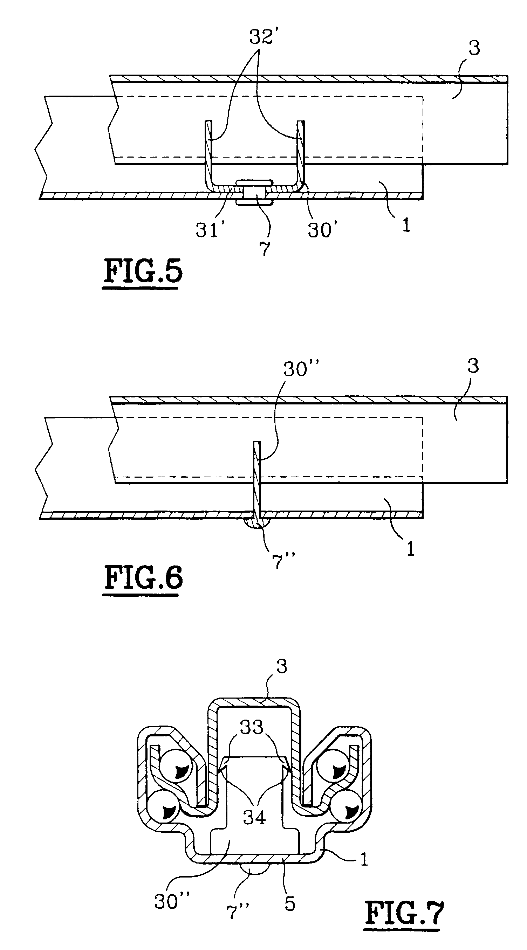

Dans la variante de réalisation représentée figure 5, la pièce d'accrochage 30' a une forme en U présentant deux ailes 32' qui s'étendent dans un plan perpendiculaire à la direction de coulissement de la glissière, chaque aile étant pourvue des dites dents 33. La pièce d'accrochage est alors fixée sur le fond 5 du profilé femelle par rivetage de la partie 31' reliant les deux ailes 32'. Cette variante permet, du fait de la présence de quatre dents au total, de renforcer la résistance à l'arrachement du profilé mâle.

Dans la seconde variante représentée figures 6 et 7, la pièce d'accrochage 30" est constituée d'une plaque plane fixée sur le fond du profilé femelle par sertissage 7" d'une languette s'étendant à partir du bord de la dite plaque, dans un orifice réalisé dans le dit fond. Dans cette variante, l'ancrage est encore amélioré en réalisant la face inférieure des dents inclinée vers le bas vers l'extérieur, comme on le voit figure 7, favorisant ainsi la poursuite de la pénétration des dents dans les ailes lorsque celles-ci tendent à se déplacer vers le haut. Cette dernière disposition est bien sûr également applicable aux autres modes de réalisation de la pièce d'accrochage.

L'invention n'est pas limitée aux modes de réalisation décrits ci-dessus uniquement à titre d'exemple. En particulier, on pourra aussi utiliser plusieurs des dites pièces d'accrochage sur une même glissière.

L'invention pourra également s'appliquer à des glissières réalisées en alliage léger, par exemple en alliage d'aluminium.

## Revendications

1. Glissière pour siège de véhicule, comportant un profilé femelle (1) ayant une section de forme générale en U présentant deux ailes (9) et deux retours d'ailes (11) dirigés l'un vers l'autre, et un profilé mâle (3) ayant également une section de forme générale en U présentant des ailes (13) et des retours d'ailes (19) dirigés vers l'extérieur et s'insérant sous les retours d'ailes (11) du profilé femelle, caractérisée en ce qu'elle comporte au moins une pièce d'accrochage (30) solidarisée sur le profilé femelle et s'étendant entre les ailes (13) du profilé mâle, la dite pièce d'accrochage comportant de chaque côté, face aux ailes du profilé mâle, au moins une dent pointue (33), en un matériau plus dur que celui du profilé mâle, la pointe de la dent étant située à proximité directe de l'aile du profilé mâle.

2. Glissière selon la revendication 1, caractérisée en ce que le bord (34) des dents (33) situé du coté du fond (5) du profilé femelle (1) est sensiblement parallèle au dit fond ou incliné vers celui-ci.

3. Glissière selon la revendication 1, caractérisée en ce que les dents (33) sont situées au niveau des retours d'aile (11) du profilé femelle.

4. Glissière selon la revendication 1, caractérisée en ce que la pièce d'accrochage (30) a une forme en équerre dont une première aile (32) s'étend dans un plan perpendiculaire à la direction de coulissement de la glissière, l'autre aile (31) s'étendant contre le fond du profilé femelle et étant fixé sur le dit fond.

5. Glissière selon la revendication 1, caractérisée en ce que la pièce d'accrochage (30') a une forme en U présentant deux ailes (32') s'étendant dans un plan perpendiculaire à la direction de coulissement de la glissière, chaque aile étant pourvue des dites dents (33).

6. Glissière selon la revendication 1, caractérisée en ce que la pièce d'accrochage (30") est constituée d'une plaque plane fixée sur le fond du profilé femelle par sertissage (7") d'une languette s'étendant à partir du bord de la dite plaque dans un orifice réalisé dans le dit fond.

## Patentansprüche

1. Gleitschiene für Fahrzeugsitze, mit einem weiblichen Profil (1), das einen Querschnitt von im allgemeinen U-Form aufweist, mit zwei Armen (9) und zwei Armumschlägen (11) wobei der eine gegen den anderen gerichtet ist, und einem männlichen Profil (3), das ebenfalls einen Querschnitt von allgemeiner U-Form aufweist, mit zwei Armen (13) und zwei Armrückführungen (19), die nach außen gerichtet sind, und unter die Armrückführungen (11) des weiblichen Profils eindringen, dadurch gekennzeichnet, daß sie wenigstens ein Anhängteil (30) aufweist, das mit dem weiblichen Profil verbunden ist und sich zwischen die Arme (13) des männlichen Profils erstreckt, wobei das Anhängteil auf jeder Seite gegenüber den Armen des männlichen Profils wenigstens einen spitzen Zahn (33) aufweist, aus einem Material, das härter ist als jenes des männlichen Profils, wobei die Spitze des Zahns in unmittelbarer Nähe des Arms des männlichen Profils angeordnet ist.

2. Gleitschiene nach Anspruch 1, dadurch gekennzeichnet, daß der Rand (34) der Zähne (33), der sich auf der Seite des Bodens (5) des weiblichen Profils (1) befindet im wesentlichen parallel zum Boden oder zu diesem geneigt verläuft.

3. Gleitschiene nach Anspruch 1, dadurch gekennzeichnet, daß die Zähne (33) auf der Höhe der Armrückführungen (11) des weiblichen Profils angeordnet sind.

4. Gleitschiene nach Anspruch 1, dadurch gekennzeichnet, daß das Anhängteil (30) die Form eines Winkels aufweist, dessen erster Arm (32) sich in einer Ebene senkrecht zur Richtung des Gleitens der Gleitschiene erstreckt und der andere Arm (31) sich gegen den Boden des weiblichen Profils erstreckt und an dem Boden befestigt ist.

5. Gleitschiene nach Anspruch 1, dadurch gekennzeichnet, daß das Anhängteil (30') die Form eines U aufweist, das zwei Arme (32') aufweist, die sich in einer Ebene senkrecht zur Gleitrichtung der Gleitschiene erstrekken, wobei jeder Arm mit den Zähnen (33) versehen ist.

6. Gleitschiene nach Anspruch 1, dadurch gekennzeichnet, daß das Anhängteil (30'') aus einer ebenen Platte gebildet ist, die an dem Boden des weiblichen Profils durch Klemmen (7'') einer Zunge befestigt ist, die sich ausgehend von dem Rand der Platte in eine Öffnung erstreckt, die in dem Boden ausgebildet ist.

## Claims

1. Slide for vehicle seat, including a female profile (1) having a generally U-shaped cross-section possessing two flanges (9) and two flange foldbacks (11) directed towards one another, and a male profile (3) likewise having a generally U-shaped cross-section possessing flanges (13) and flange foldbacks (19) directed outwards and fitting under the flange foldbacks (11) of the female profile, characterized in that it includes at least one catch piece (30) secured to the female profile and extending between the flanges (13) of the male profile, the said catch piece including, on each side, facing the flanges of the male profile, at least one pointed tooth (33), made of a material harder than that of the male profile, the point of the tooth being situated in direct proximity to the flange of the male profile.

2. Slide according to Claim 1, characterized in that the edge (34) of the teeth (33) which is situated on the side of the bottom (5) of the female profile (1) is substantially parallel to the said bottom or inclined towards it.

3. Slide according to Claim 1, characterized in that the teeth (33) are situated at the level of the flange foldbacks (11) of the female profile.

4. Slide according to Claim 1, characterized in that the catch piece (30) has a right-angle shape, a first flange (32) of which extends in a plane perpendicular to the sliding direction of the slide, the other flange (31) extending against the bottom of the female profile and being fixed to the said bottom.

5. Slide according to Claim 1, characterized in that the catch piece (30') has a U-shape possessing two flanges (32') extending in a plane perpendicular to the sliding direction of the slide, each flange being provided with the said teeth (33).

6. Slide according to Claim 1, characterized in that the catch piece (30") consists of a plane plate fixed to the bottom of the female profile by crimping (7") of a tongue extending from the edge of the said plate through an orifice formed in the said bottom.
